# EUROPEAN PATENT SPECIFICATION

(11) **EP 2 482 110 B1**
(45) Date of publication and mention of the grant of the patent: **24.08.2016**
(21) Application number: 11152545.7
(22) Date of filing: 28.01.2011
(51) Int. Cl.: G02B 6/44, H01B 11/18, H01B 11/22

(54) **Optical assembly and optical cable thereof**
Optische Anordnung und optisches Kabel dafür
Ensemble optique et câble optique correspondant

(43) Date of publication of application: 01.08.2012
(73) Proprietor: CCS Technology, Inc., Wilmington, DE 19803 (US)
(72) Inventor: Stöcklein, Waldemar, 96450, Coburg (DE); Wünsch, Günter, 96465, Neustadt bei Coburg (DE); Merbach, Gerhard, 96465, Neustadt bei Coburg (DE)
(74) Representative: Epping - Hermann - Fischer

(56) References cited:
- CN-Y- 2 821 806
- US-A- 4 695 127
- US-A- 5 061 823
- US-A- 5 212 350

## Description

### TECHNICAL FIELD

The present disclosure relates to an optical assembly having at least one optical waveguide and an electrically conductive element. The optical assembly may be used to connect opto-electronic circuitry in an electronic system.

### BACKGROUND

Electronic systems often require the transmission of to be processed signals and the transmission of electrical power to supply an apparatus that processes the signal in the same cable. With increasing signal rates that can be handled by electronic systems it is expedient to transmit the signals through optical waveguides while transmitting the electrical power through an electrical conductor. One example of transmitting an optical signal and supplying power through one cable is an optical USB cable.

With the ongoing trend of miniaturization and increasing demand for the transmission of signals and electrical power, space for the cables becomes limited. For example, the duct space in premises or office environment and the space in patch fields is limited and, furthermore, the connection between electronic equipment like personal computers and external devices like external disks, video recorders, and digital cameras requires cables that are able to transmit optical and/or electrical signals and electrical power wherein such cables should have an as low as possible diameter and a high flexibility. Especially, as optical waveguides are often realized by optical glass fibers and electrical conductors are often realized by copper wires, there is a need for a combination of fiber optics with copper wherein the fibers are used for the data transmission and the copper wires are used for the transmission of power to drive external devices. An optical assembly combining fiber optics with copper should have low cross-sectional diameter and high flexibility, preferably without having a preferential bend axis.

### SUMMARY

According to an embodiment, an optical assembly comprises
at least one optical waveguide having a diameter. An electrically conductive layer surrounds the at least one optical waveguide, wherein the electrically conductive layer comprises an electrically conductive band that is helically spun around the at least one optical waveguide and wherein a gap is established between adjacent side edges of the electrically conductive band. At least one strength member is disposed between the at least one optical waveguide and the electrically conductive layer, the at least one strength member comprising a yarn. A sheath surrounds the electrically conductive layer. Any distance between the electrically conductive layer and the at least one optical waveguide is less than the diameter of the at least one optical waveguide.

According to embodiments, an optical assembly may have a cross-sectional diameter of no more than 1.1 mm or even 0.95 mm or less. Another electrically conductive layer may surround the first sheath layer, and another sheath layer may surround the second electrically conductive layer. The electrically conductive layers may comprise thin metallic wires like copper wires disposed in a single layer and/or a metallic band being spun in helix form. The thin metallic wires may form a braid or a mesh or may be spun around the optical waveguide or stranded. Instead of metallic wires, wires of a conductive polymer or an extruded conductive polymer layer are possible as well.

In other embodiments, two or more of said optical assemblies in combination may be surrounded by a jacket to form a cable. Other elements may be included in the cable as well. The optical assembly and/or the cable may be used in an electronic system to connect opto-electronic circuitry and transmit optical signals and electrical power through the same cable.

Those skilled in the art will appreciate the above-stated advantages and other advantages and benefits of various additional embodiments reading the following detailed description of the embodiments with reference to the below listed figures of the drawing.

### BRIEF DESCRIPTION OF THE FIGURES

The present embodiments are explained in more detail below with reference to figures which show the exemplary embodiments.
- FIG. 1: is a cross-section of an optical assembly according to an embodiment.
- FIG. 2: is a cross-section of an optical assembly according to another embodiment.
- FIG. 3: is a cross-section of a cable assembly according to yet another embodiment.
- FIG. 4: is a side view to an optical waveguide surrounded by a helix of a metallic band that can be used in an optical assembly according to an embodiment.
- FIG. 5: is a cable comprising optical assemblies.
- FIG. 6: is an electronic system using a cable assembly according to an embodiment.

### DETALED DESCRIPTION

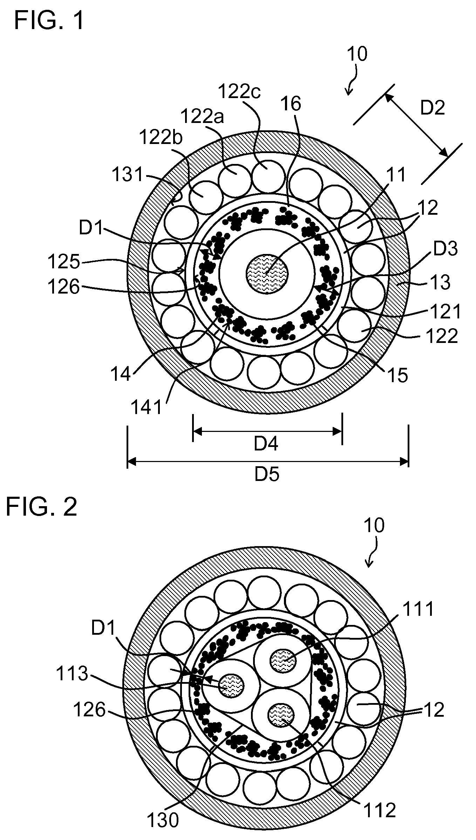

FIG. 1 shows a cross-sectional view of an optical assembly 10. The longitudinal extension of optical assembly 10 is perpendicular to the plane of the shown cross-section. Assembly 10 comprises an optical waveguide 11 which may be an optical fiber. The optical fiber may be an optical glass fiber or a plastic optical waveguide. The optical waveguide 11 is disposed in the core or center region of the assembly 10. As shown, the optical waveguide 11 is disposed in the center region or the center of the circularly shaped form of the assembly 10.

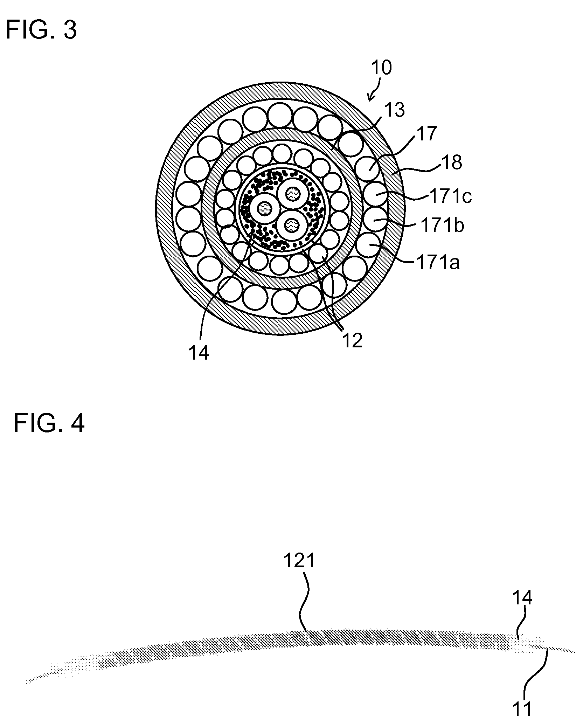

The optical waveguide 11 is surrounded by an electrically conductive layer 12. The electrically conductive layer 12 comprises an inner layer which is composed of a metallic band 121. The band 121 is spun around the optical waveguide 11 as a helix and extends along the longitudinal extension of the assembly and may extend substantially in parallel to optical waveguide 11. While FIG. 1 shows the cross-section of the spun band 121, FIG. 4 shows in more detail the longitudinal extension of the band 121 from a side view including the elements surrounded by band 121, to be explained later below.

The electrically conductive layer 12 further comprises a layer of wires 122. In the embodiment, the layer of metallic wires 122 comprises a number of, e.g., 18 thin wires forming a single layer of wires. Each wire of the layer of wires, for example, wire 122b is in contact with its immediate neighboring wires, wire 122a on the left-hand side and wire 122c on the right-hand side. When the assembly is bent or otherwise treated, the wires of the layer 122 have some flexibility to displace so that they may not be always in contact with their adjacent neighboring wires over their entire length of the assembly, however, the cross-sectional dimensions of the assembly are at least designed such that wire 122b is at least substantially in contact with the adjacent neighboring wires 122a, 122c along their longitudinal extension.

The electrically conductive layer 12 is surrounded by a sheath layer 13 which may be an extruded polymer layer 13. The cross-sectional shape of the sheath layer 13 is circular as is the cross-sectional shape of the helix-like spun band 122. Each of the wires of layer 122, like wire 122d, contact the sheath layer 13 on its inner surface 131 at least along a certain length in the longitudinal direction of the assembly. As there is flexibility within the arrangement when the cable is bent, some wires in the same cross-sectional plane, like wire 122d, contact the inner surface 131 of sheath 13, while other wires do not contact sheath 13 in a particular handling situation of the assembly. At least all wires are substantially in contact with sheath 13 along their longitudinal extension. Furthermore, each of the wires of layer 122 contact the outer surface 125 of the band 121.

Disposed between the optical waveguide 11 and the electrically conductive layer 12 is a strength member arrangement of at least one or more strength members. The strength member arrangement of assembly 10 of FIG. 1 has several strength members of which three strength members are denoted with 14, 15, 16 which are each comprised of multifilaments or yarn 141 composed together to form a strength member element or roving. The yarns 141 of the strength member element or roving 14 comprise aramide yarns. Other yarn materials that are suitable to perform the function of a strength member are useful as well, like one or more of glass fibers, polymer fibers, graphite and carbon fibers. For example, the aramide or glass or polymer or graphite or carbon material forms multifilaments which constitute a yarn. A multitude of yarns form a roving. Such rovings are commercially available at specified density or weight, for example, specified in weight per kilometer. Aramide rovings may have a suitable value of 200 to 800 dtex. In an embodiment, for a 250 µm optical glass fiber to be used in accordance with the assembly of this invention, a multitude of 400 dtex rovings of aramide yarn can be used as strength members disposed between the optical fiber and the electrically conductive layer.

The electrically conductive layer may be formed of a metallic material which may be a metal, preferably copper. Copper has high electric conductivity, for example, to carry electric power and/or electric signals. Electrically conductive layer 12 may be formed from an organic electrical conductor like an electrically conductive polymer material as well. The organic conductor may be formed as a layer of thin polymer wires like layer 122 and, optionally, may further comprise a spun polymer band like band 121. Alternatively, the electrically conductive layer 12 may be an extruded layer which is extruded from a thermoplastic organic electrical conductor material. In this case, the electrically conductive organic polymer layer has the form of a tube surrounding the at least one optical waveguide and the strength members. The electrically conductive layer may have the function to shield the cable and carry surface charges through the assembly. The electrically conductive polymer may be made of an ion doped polymer like, for example, ion doped polyacetylene, ion doped polyethylenevinylene, ion doped polypyrrole, ion doped polyaniline, ion doped polyphenylenesulfide and the like.

The at least one optical waveguide may contact the strength elements 14, 15, 16 which in turn may contact the electrically conductive layer 12 as well. While in the shown embodiment the electrically conductive layer comprises the metal band 121 and the single layer of thin wires 122, either one of the metallic band 121 and the thin wires 122 may be omitted. The strength elements 14, 15, 16 may contact the metal band 121. If the band 121 is omitted, the strength member elements 14, 15, 16 directly contact the layer of thin wires 122. The close relationship between the above described elements provides for a compact optical assembly having a small outer diameter. In particular, the at least one optical waveguide is not surrounded by an electrically insulating tube, e.g. a polymer tube, which could hypothetically be disposed between the at least one optical waveguide and the electrically conductive layer so that, without an electrically insulating tube, the assembly is relatively compact.

The inner diameter of the electrically conductive layer 12, e.g. the diameter of circular surface 126 of band 121 may be designed such that any distance D1 between the outer surface of waveguide 12 and inner surface 126 of band 121 or of electrically conductive layer 12 is smaller or less than the diameter D2 of waveguide 11. In other words, the maximum distance between the at least one optical waveguide 11 and the electrically conductive layer 12 is less than the diameter D2 of the at least one optical waveguide 11. Again in other words, the closest distance, shown as D1 in Fig. 1 and the largest distance, shown as D3 in Fig. 1 between the at least one optical waveguide 11 and the electrically conductive layer 12 are each less than the diameter D2 of the at least one optical waveguide 11. For example, if an optical fiber 11 having a diameter D2 of 250 µm is used, D1 is less than 250 µm, and the inner diameter D4 of electrically conductive layer 12 is less than 750 µm. The space between waveguide 11 and band 121 is sufficient to include strength elements 14, 15, 16. The distances D1, D3 may be measured between the outer surface of the fiber and the inner surface of the electrically conductive layer 12 which may be the inner surface of the band 121 or the inner surface of the layer or wires 122, if the band 121 is omitted. Such dimensions provide a flexible optical assembly which can be bent with a bend radius of down to 1 - 2 D, wherein D is the outer diameter D5 of the cable. If a fiber with a larger diameter, e.g. 500 µm, 700 µm or 900 µm is used, the inner diameter of the electrically conductive layer 12 can be calculated in corresponding manner.

Furthermore, distances D1 and D3 may have a minimum value to ensure sufficient space between optical waveguide 11 and the inner surface 126 of electrically conductive layer 12 to accommodate the strength member elements or rovings 14, 15, 16. In an embodiment, the distances D1 and D3 are about 50 µm or 50 µm each so that the strength member elements 14, 15, 16 surround the optical waveguide 11 and are accommodated in the space between the optical waveguide 11 and the copper band 121. This distance is suitable to accommodate aramide yarn rovings of a linear mass density of about 400 dtex (decitex). Other values for distances D1, D3 are suitable as well depending on the dimensioning of the assembly and the thickness of the strength member rovings. For example, the distances D1, D3 may be between 20 µm to 50 µm with a value in the range of or close to 20 µm when a 200 dtex aramide strength member roving is used. On the other hand, when using a 800 dtex roving, the distances D1, D3 may be in the range between 150 µm to 200 µm. Accordingly, the minimum inner diameter D4 of the electrically conductive layer is about 350 µm for 400 dtex aramide rovings in the strength member system and may come down to about 290 µm when a 200 dtex aramide roving is used. On the other hand, using a 800 dtex aramide roving requires a minimum diameter D4 in the range of 550 µm to 650 µm, all for a 250 µm optical waveguide. It is to be understood that the above explained minimum distances D1, D3 are substantially the same for optical waveguides with diameters larger than 250 µm because the minimum distance depends on the type of strength member roving. It is to be understood that the minimum diameter D4 of the electrically conductive layer depends on the diameter of the optical waveguide and the distances D1 and D3 and can be calculated according to the above given explanation accordingly.

The wires 122 each may extend in parallel with each other. The wires may extend in parallel to the longitudinal axis of the assembly, which may comprise the center of the assembly as described above and which may be substantially in parallel to optical waveguide 11 in the embodiment. In another embodiment, the wires 122 may be stranded along the longitudinal extension of the assembly which may be a continuous helix along the longitudinal extension of the assembly. An SZ-stranding may be useful as well. The lay length of the SZ-stranding may be determined by the required flexibility of the assembly and may be in the range of 10 to 20 times the diameter of the layer of wires 122. In another embodiment, the wires may form a mesh or a braid extending along the longitudinal direction of the assembly 10 so that the wires cross over each other to form said mesh or braid.

The electrically conductive layer 12 being a metallic layer, preferably a copper layer, may further have the function of an armor layer which protects the elements surrounded by the armor layer like the at least one optical waveguide from transversal forces so that the assembly has crush resistance. This armored fiber assembly provides for a relatively ruggedized assembly suitable for various applications.

The electrically conductive layer 12 may be used to transmit an electrical signal. The electrically conductive layer 12 may be as well used to transmit electrical power, for example, to supply opto-electronic circuitry that receives the optical signal transmitted through optical waveguide 11 concurrently with electrical power. In this case, the electrically conductive layer 12 must provide a minimum current supply capability to supply sufficient power for the opto-electronic circuitry or, stated otherwise, must exhibit a not to exceed ohmic resistance per length which may be measured in Ohm/meter (Ω/m). For example, if an equivalent of an AWG 28 copper cable in terms of current carrying capability or ohmic resistance per length should be achieved (AWG: American Wire Gauge), the copper band 121 may have a cross-sectional thickness which is the distance between the surfaces 125 and 126 of about 0.1 mm or less. The thickness of the copper band 121 may be even lower in the range of 0.07 mm or as small as 0.05 mm. The smaller the thickness, the lower its resistance and the higher the flexibility of the assembly. Provided, for example, a copper band with a diameter of 0.1 mm, the layer of thin copper wires 122 may comprise 18 wires each having a diameter of about 0.15 mm to achieve an equivalent of an AWG 28 copper conductor. If the metallic band 121 is omitted, the diameter of the copper wires 122 may be larger than 0.15 mm. The copper wires 122 may have a diameter of about 0.1 mm if less than AWG 28 current carrying capability is required. For supplying external devices to personal computers or laptops with electrical power through the optical cable assembly, the metallic arrangement of copper wires 122 and copper band 121 should have a current carrying capability which is equivalent to at least the current carrying capability of a copper wire conductor according to AWG 28 or larger, as AWG 28 is usually sufficient to supply external devices to personal computers or laptops as of today with electrical power.

Further to FIG. 1, the sheath layer 13 may be extruded over the electrically conductive layer 12 and may comprise any material commonly used in cable technology to manufacture a sheath layer by extrusion. Suitable materials may comprise a thermoplastic polymer selected from the class of polyolefines like polyethylene (PE), which are electrically insulating polymers. For indoor application flame retardant characteristics (FRNC) may be required which may be achieved by adding flame retardening fillers to the thermoplastic polymer like aluminum-hydroxide, magnesium-hydroxide or the like. The thickness of the sheath layer depends on the capability to be extruded and may be in the range of 0.1 mm or less.

The outer diameter of the spun metallic band 121, which is the diameter of the outer surface 125 of band 121, is in the range of 0.4 mm to 0.5 mm. The outer diameter D5 of the polymer sheath layer 13 is in the range of 1.1 mm or less and, depending on the type and/or number of optical waveguides and the tightness of the assembly, may come down to the range of 0.95 mm or even less. For example, a cable assembly comprising one and only one optical glass fiber, three to five multifilaments of aramide yarn, an electrically conductive layer being a layer of thin wires without a spun band as shown in FIG. 1 and an extruded polymer sheath above has an outer diameter D5 of about 0.95 mm or 0.95 mm.

In general, the cross-sectional shapes of sheath 13, layer of thin wires 122 and spun band 121 is circular and the relative arrangement of said elements is concentric. The center of that arrangement may be the longitudinal axis of the arrangement. The optical waveguide 11 in the core or center region of the assembly 10 may be a bare optical fiber or a buffered optical fiber which is coated with a polymer layer. A standard bare fiber may have a diameter of 250 µm to obtain the above described outer diameter of 0.95 to 1.1 mm of the overall outer diameter of the assembly. Buffered fibers may be used as well which have a diameter in the ranges of 500 µm, 700 µm or even 900 µm. Instead of an optically conducting glass fiber, a plastic optical fiber made from a polymer material may be used as well. Especially, the fibers may be bend-insensitive glass fibers that have low attenuation even if they are bent with very low radius, which may be the ClearCurve® optical fiber of Corning, Inc. In order to achieve sufficient tensile strength, the assembly comprises the strength elements 14, 15, 16 which is useful in connection with the use of 250 µm fibers.

With regard to the manufacture of the assembly, the optical waveguide according to an embodiment is surrounded with a multitude, e.g. 3 to 5 rovings of aramide yarn. Then, a copper band is spun around the aramide rovings. The resulting arrangement is surrounded by a layer of, e.g., 16 to 18 stranded copper wires. Finally, the resulting arrangement is forwarded to an extruder to extrude a thermoplastic sheath around.

The embodiment shown in FIG. 2 has multiple optical waveguides in the core region surrounded by electrically conductive layer 12. As shown in FIG. 2, three optical glass fibers 111, 112, 113 are disposed in the core region contacting the strength member elements. The fibers may extend in parallel to each other or may be stranded. In an embodiment, the three fibers 111, 112, 113 may be arranged together in that they are surrounded by a binder element 130. They may be bound or sewed together by a binder thread like a textile yarn to form a composite fiber element. In such composite fiber element the individual fibers are packed together so that they have a substantially fixed spatial relation with each other. The binder element 130 may be wrapped in helix form extending along the longitudinal direction of the assembly around the fibers. One or more binder elements may be sewed in that the binder element(s) connect(s) with itself or with each other at discrete turning points. Here again, any distance D1 between a local most extended part or area of the outer contour of the composite fiber element and the inner surface of the electrically conductive layer is less than a diameter of the fibers. In other words, the maximum distance between said local most extended part of the outer contour of the composite fiber element and the inner surface of the electrically conductive layer is less than a diameter of one of the fibers of the composite fiber element. When, for example, 250 µm fibers are used, a distance D1 between any of fibers 111, 112, 113 and the inner surface 126 of layer 12 is less than 250 µm. As shown in FIG. 2, one of the local most extended parts of the outer contour of the composite fiber element is tip corner of optical waveguide 113.

As an alternative (not shown in the figures) the at least one optical waveguide may be a portion of a fiber optic ribbon which is an arrangement of at least two or more optical fibers extending in parallel in a fixed relationship wherein the fibers are embedded in and surrounded by a polymer material. Several fiber optic ribbons may be stacked on each other and may be disposed in the core region of the assembly. The fiber optic ribbon may extend along the length of the assembly rotated in helix form or rotated back and forth in a periodic manner. A stack of fiber optic ribbons, in an embodiment, should have a symmetrical outer contour, e.g. a cross-sectional rectangle or square contour. The distance between a local most extended part of a corner positioned optical waveguide of the ribbon or the ribbon stack and the inner surface of the electrically conductive layer 12 is less than a diameter of one of the fibers.

As will become apparent, the disclosed optical assembly is very flexible and may have a very low bend radius although maintaining optical performance of the fiber, especially when a bend-insensitive fiber is used. The use of bend-insensitive optical fibers will allow a very low insertion loss when used in spatially constraint environment. The electrically conductive layer using a copper band and a single layer of thin copper wires is very flexible in that the wires slightly displace when the cable is bent and go back to their original position when the cable is released. The strength elements in the inner area of the cable provide for high-tensile strength rendering an assembly that is very flexible and has a high tensile strength. Furthermore, due to the metallic nature of the electrically conductive layer that layer has the function of an armor layer as explained above, so that the assembly is ruggedized and provides for good protection of the core elements while having low diameter, high flexibility and high tensile strength which are usually contradicting characteristics of a cable.

FIG. 3 shows another embodiment of an optical assembly. The assembly includes an electrically conductive layer 12 made of copper wires and a spun copper band surrounded by polymer sheath layer 13 as described in connection with FIGs. 1 and 2. In addition, polymer sheath layer 13 is further surrounded by another electrically conductive layer 17. Layer 17 comprises a single layer of thin electrically conductive wires which may be metallic wires like copper wires or electrically conductive polymer wires depending on the field of application of the assembly. The electrically conductive layer 17 is further surrounded by another sheath layer 18. The other sheath layer 18 is a layer extruded form a thermoplastic polymer. Sheath 18 may be made of the same material as layer 13. The wires of layers 17, for example, wires 171a, 171b, 171c are disposed as a single layer, wherein one wire 171b substantially contacts is neighboring wires 171a, 171c and contacts as well the outer surface of the inner sheath layer 13 and the inner surface of the outer sheath layer 18. Depending on the handling of the cable, whether bent or not, one or more of said physical contacts may not exist in a cross-section, however, will exist at least once along the length of the cable.

All wires of the other, outer electrically conductive layer 17 together render a total current carrying capability which may be equivalent to an AWG 28 cable. The number of wires and the diameter of the wires of layer 17 may be such that the desired total current carrying capability of the wires of layer 17 will be achieved. The wires of layer 17 may run in parallel to each other and in parallel to the longitudinal axis of the assembly, they may be spun helix-like or SZ-stranded or may be formed as a braid or a mesh, depending on the field of application of the cable. A mesh or braid-like structure has more crush resistance than stranded or unstranded structures of the wires of layer 17. In a preferred embodiment, the wires are made of copper.

Having electrically conductive layers 12 and 17, the assembly can be used to connect opto-electronic circuitry within an electronic system and supply electrical power through both electrically conductive layers 12, 17 to operate an external device to the electronic system. It is useful to design the current carrying capabilities and ohmic resistance per length of both electrically conductive layers 12, 17 at substantially the same size or the same so that the two poles of an electrical power supply can be transmitted through both layers without constraints. In practice, to achieve this goal layers 12 and 17 each may have the current carrying capability of an AWG 28 copper cable. In this case, the diameter of the wires in the outer electrically conductive layer 17 is about the same diameter or the same diameter or even larger as/than the diameter of the wires of inner electrically conductive layer 12, as the electrically conductive layer 12 comprises band 121 and layer of wires 121. If no metallic band 121 is present (not shown in the figures), the diameter of the wires in the outer electrically conductive layer 17 is smaller than the diameter of the wires of electrically conductive layer 12. Furthermore, layer 17 comprises a higher number of wires when compared to layer 12, as the circumference of layer 17 is higher than the circumference of layer 12. For example, in the shown embodiment, layer 12 comprises 18 wires and the layer 17 comprises 22 wires. It is, however, also possible to use layers 12, 17 to transmit an electrical signal in each layer to an external device. Having layers 12 and 17, a two way full duplex electrical signal communication can be achieved.

It will become apparent that additional electrically conductive layers, e.g. layers of thin copper wires, may surround the sheath layer 18, wherein each such additional electrically conductive layer is in contact and is surrounded with an additional polymer sheath layer extruded above.

FIG. 4 shows a portion of the cable shown in FIG. 1. The portion comprises the optical waveguide 11, the strength elements 14 and the metallic band 121. The metallic band 121, which may be a copper band, is spun around the strength elements 14 and optical waveguide 11. The band 121 forms a continuous helix around the strength members 14 and the optical waveguide 11 wherein the side edges of the band have an adjacent relationship with each other with a small gap in between or abut and contact each other.

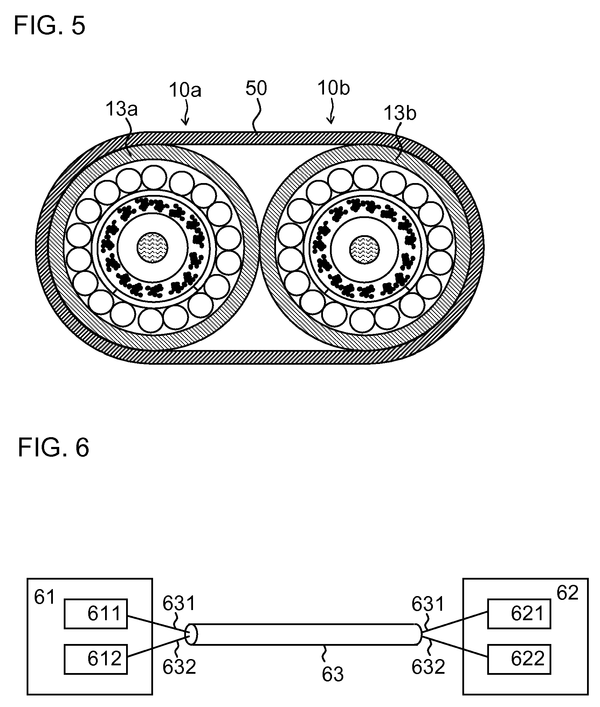

FIG. 5 shows an optical cable that comprises two optical assemblies 10a, 10b in neighbouring relationship. The assemblies of one of FIGs. 1, 2 and 3 may be used, wherein assemblies 10a, 10b may be selected from the same figure and are of identical structure or may be selected from different figures having different structure. Both assemblies 10a, 10b contact each other at their sheaths 13a, 13b and extend in parallel along the longitudinal extension of the cable. Alternatively, they may be drilled as well. Both assemblies 10a, 10b are surrounded by a jacket 50 holding them in fixed relationship. The jacket 50 may be extruded from a thermoplastic polymer material, e.g., PE, and FRNC function may be added as described above in connection with FIG. 1. Configurations of more than two assemblies surrounded by a jacket or even accompanied with other elements are possible as well. For example, several optical assemblies can be arranged around a central rod, wherein all assemblies surrounded by a jacket.

FIG. 6 shows an electronic system that comprises first and second opto-electronic circuitries 61, 62 which are connected by the optical assembly 63 which may be any of the aforementioned optical assemblies. Each of the opto-electronic circuitries 61, 62 includes an optical signal receiving parts 611, 621 and a power supply circuit 612, 622. The optical signal receiving parts 611, 621 are connected with each other with the at least one optical waveguide 631. The power supply parts 612, 622 are connected with each other by electrically conductive layer 632, which may be formed from copper. In an embodiment, circuit 61 may be a personal computer and circuit 62 may be an external device connected to the personal computer 61, for example, a hard disk drive. Power may be supplied from the power supply output of circuit 612 in personal computer 61 to the power supply circuit 622 of external device 62. The assembly may be used to connect two devices according to the USB-Standard (USB: Universal Serial Bus). Other applications for the disclosed assembly may include IDAS (IDAS: Indoor Distributed Antenna System), which requires high signal rates for signal distribution for which the optical waveguide is suited and the distribution of electrical power to supply the opto-electronic circuits in the system for which the electrically conductive layer of the disclosed assembly is suited.

Other configurations of an electronic system are possible as well (not shown) wherein the electrically conductive layer 12 of the optical assembly is used to transmit an electrical signal in addition to an optical signal through optical waveguide 11 between two electronic circuits in an electronic system.

Many modifications and other embodiments of the present invention within the scope of the claims will be apparent to those skilled in the art. For instance, the concept of the present invention can be used with any suitable optic cable design and embodiments can include other suitable cable components without limiting the invention. Thus, it is intended that this invention covers these modifications and embodiments as well that are also apparent to those skilled in the art.

## Claims

1. An optical assembly, comprising:
at least one optical waveguide (11) having a diameter (D2);
an electrically conductive layer (12) surrounding the at least one optical waveguide (11),
wherein the electrically conductive layer (12) comprises an electrically conductive band (121) that is helically spun around the at least one optical waveguide (11) and wherein a gap is established between adjacent side edges of the electrically conductive band;
at least one strength member (14, 15, 16) disposed between the at least one optical waveguide (11) and the electrically conductive layer (12), the at least one strength member (14, 15, 16) comprising a yarn (141); and
a sheath (13) surrounding the electrically conductive layer (12),
wherein any distance (D1, D3) between the electrically conductive layer (12) and the at least one optical waveguide (11) is less than the diameter (D2) of the at least one optical waveguide (11).

2. The optical assembly of claim 1, wherein the at least one strength member (14, 15, 16) comprises a roving (14) made of one of aramide yarn (141), glass yarn, and carbon yarn, the roving (14) contacting the at least one optical waveguide (11) and the electrically conductive layer (12).

3. The optical assembly of claim 1 or 2, wherein the electrically conductive layer (12) is formed from at least one of a metallic material, a metal and an electrically conductive polymer material, and the sheath (13) is formed from an electrically insulating polymer material.

4. The optical assembly of any of claims 1 to 3, the electrically conductive layer (12) comprises a multitude of wires (122) surrounding the at least one optical waveguide (11).

5. The optical assembly of claim 4, wherein the wires (122) are stranded along the longitudinal extension of the optical assembly (10) or are spun around the at least one optical waveguide (11) or form a mesh which surrounds the at least one optical waveguide (11).

6. The optical assembly of any of claims 1 to 5, wherein the conductive band (121) forms a helix around the at least one strength member (14) and the at least one optical waveguide (11).

7. The optical assembly of any of claims 1 to 6, wherein the optical waveguide (11) is disposed in a center cross-sectional region of the optical assembly (10) and is one of an optical fiber comprising quartz glass and a optical waveguide made of a polymer material, the electrically conductive layer (12) is made of at least one of a multitude of copper wires (122) and a copper band (121) spun around the at least one optical fiber.

8. The optical assembly of any of claims 1 to 7, wherein the electrically conductive layer (12) has a circular shape surrounding a space, wherein a distance (D1, D3) between the at least one optical waveguide (11) and the electrically conductive layer (12) is between 20 µm and 200 µm, preferably between 50 µm to 150 µm, most preferably about 50 µm, to accommodate a multitude of strength member yarn rovings between the at least one optical fiber and the electrically conductive layer (12).

9. The optical assembly of any of claims 1 to 8, further comprising another electrically conductive layer (17) surrounding the sheath (13) and another sheath (18) surrounding the other electrically conductive layer (17).

10. The optical assembly of claim 9, wherein the electrically conductive layer (12) and the other electrically conductive layer (17) each have a current carrying capability, the current carrying capabilities of the electrically conductive layer (12) and the other electrically conductive layer (17) being approximately equal.

11. The optical assembly of any of claims 1 to 10, wherein the at least one optical waveguide (11) is a portion of a fiber optic ribbon or a stack of fiber optic ribbons or a composition of fibers packed together in a substantially fixed relationship disposed in the center cross-sectional region of the optical assembly (10), wherein any distance (D1) between a local most extended part of an outer contour of the fiber optic ribbon, the stack of fiber optic ribbons and the composition of fibers, resp., and the electrically conductive layer (12) is less than the diameter of the at least one optical waveguide (11).

12. The optical assembly of claim 1 to 6, wherein the at least one optical fiber (11) contacts aramide yarns (141) of the at least one strength member (14, 15, 16) disposed between the at least one optical fiber (11) and the electrically conductive layer (12), a metallic band (121) is spun around the at least one optical fiber (11) and contacts the aramide yarn (141), a multitude of metallic wires (122) surrounds the metallic band (121), each of the wires (122b) being in contact with a first (122a) and a second (122c) adjacent one of the multitude of metallic wires (122) and further being in contact with the metallic band (121), a polymer sheath (13) surrounds the multitude of metallic wires (122), the sheath (13) being in contact with each of the multitude of metallic wires (122), the outer diameter (D5) of the sheath (13) is 1.1 mm or less, preferably 0.95 mm or less.

13. Use of an optical assembly of any of claims 1 to 12 in an electronic system, the system comprising opto-electronic circuitry (61, 62) which comprises a power supply part (612, 622) and an optical signal processing part (611, 621), connecting the electrically conductive layer (632) to the power supply part (612, 622) of the opto-electronic circuitry to supply electrical power to the opto-electronic circuitry (61, 62) and connecting the at least one optical waveguide (631) to the optical signal processing part (611, 621) of the opto-electronic circuitry to supply an optical signal to the opto-electronic circuitry.

14. Optical cable comprising a first and a second optical assembly (10a, 10b) of any of claims 1 to 13, further comprising a jacket (50) surrounding the first and the second optical assemblies (10a, 10b).

## Patentansprüche

1. Optische Baugruppe, Folgendes aufweisend:
mindestens einen Lichtwellenleiter (11) mit einem Durchmesser (D2) ;
eine elektrisch leitfähige Schicht (12), die den mindestens einen Lichtwellenleiter umgibt, wobei die elektrisch leitfähige Schicht (12) ein elektrisch leitfähiges Band (121) aufweist, das spiralförmig um den mindestens einen Lichtwellenleiter (11) gedreht ist, und wobei ein Spalt zwischen angrenzenden Seitenrändern des elektrisch leitfähigen Bands besteht;
mindestens ein Festigkeitsteil (14, 15, 16), das zwischen dem mindestens einen Lichtwellenleiter (11) und der elektrisch leitfähigen Schicht (12) angeordnet ist, wobei das mindestens eine Festigkeitsteil (14, 15, 16) ein Garn (141) aufweist;
und
eine die elektrisch leitfähige Schicht (12) umgebende Hülle (13),
wobei jeglicher Abstand (D1, D3) zwischen der elektrisch leitfähigen Schicht (12) und dem mindestens einen Lichtwellenleiter (11) kleiner ist als der Durchmesser (D2) des mindestens einen Lichtwellenleiters (11).

2. Optische Baugruppe nach Anspruch 1, wobei das mindestens eine Festigkeitsteil (14, 15, 16) ein Faserbündel (14) aufweist, aus Aramidgarn (141), Glasgarn oder Kohlenstoffgarn, wobei das Faserbündel (14) den mindestens einen Lichtwellenleiter (11) und die elektrisch leitfähige Schicht (12) kontaktiert.

3. Optische Baugruppe nach Anspruch 1 oder 2, wobei die elektrisch leitfähige Schicht (12) aus einem metallischen Material, einem Metall und/oder einem elektrisch leitfähigen Polymermaterial gebildet ist, und die Hülle (13) aus einem elektrisch isolierenden Polymermaterial gebildet ist.

4. Optische Baugruppe nach einem der Ansprüche 1 bis 3, wobei die elektrisch leitfähige Schicht (12) eine Vielzahl von Drähten (122) aufweist, die den mindestens einen Lichtwellenleiter (11) umgeben.

5. Optische Baugruppe nach Anspruch 4, wobei die Drähte (122) entlang der Längserstreckung der optischen Baugruppe verseilt sind oder um den mindestens einen Lichtwellenleiter (11) gedreht sind oder ein Geflecht bilden, das den mindestens einen Lichtwellenleiter (11) umgibt.

6. Optische Baugruppe nach einem der Ansprüche 1 bis 5, wobei das leitfähige Band (121) eine Spirale um das mindestens eine Festigkeitsteil (14) und den mindestens einen Lichtwellenleiter (11) bildet.

7. Optische Baugruppe nach einem der Ansprüche 1 bis 6, wobei der Lichtwellenleiter (11) in einem Mittenquerschnittsbereich der optischen Baugruppe (10) angeordnet und eine Quarzglas umfassende Lichtleitfaser oder ein Lichtwellenleiter aus einem Polymermaterial ist, wobei die elektrisch leitfähige Schicht (12) aus einer Vielzahl von Kupferdrähten (122) und/oder einem um die mindestens eine Lichtleitfaser gedrehten Kupferband (121) ist.

8. Optische Baugruppe nach einem der Ansprüche 1 bis 7, wobei die elektrisch leitfähige Schicht (12) eine Kreisform hat, die einen Raum umgibt, wobei ein Abstand (D1, D3) zwischen dem mindestens einen Lichtwellenleiter (11) und der elektrisch leitfähigen Schicht (12) zwischen 20 µm und 200 µm, vorzugsweise zwischen 50 µm und 150 µm, am bevorzugtesten ca. 50 µm beträgt, um eine Vielzahl von Festigkeitsteilgarn-Faserbündel zwischen der mindestens einen Lichtleitfaser und der elektrisch leitfähigen Schicht (12) unterzubringen.

9. Optische Baugruppe nach einem der Ansprüche 1 bis 8, darüber hinaus eine weitere elektrisch leitfähige Schicht (17), welche die Hülle (13) umgibt, und eine weitere Hülle (18) aufweisend, welche die weitere elektrisch leitfähige Schicht (17) umgibt.

10. Optische Baugruppe nach Anspruch 9, wobei die elektrisch leitfähige Schicht (12) und die weitere elektrisch leitfähige Schicht (17) jeweils eine Stromführungsfähigkeit haben, wobei die Stromführungsfähigkeiten der elektrisch leitfähigen Schicht (12) und der weiteren elektrisch leitfähigen Schicht (17) in etwa gleich sind.

11. Optische Baugruppe nach einem der Ansprüche 1 bis 10, wobei der mindestens eine Lichtwellenleiter (11) ein Teil eines Faseroptikbands oder eines Stapels aus Faseroptikbändern oder eine Zusammensetzung aus in einem im Wesentlichen feststehenden Verhältnis zusammengepackten Fasern ist, die im Mittenquerschnittsbereich der optischen Baugruppe (10) angeordnet sind, wobei jeglicher Abstand (D1) zwischen einem lokal am meisten ausgeweiteten Teil einer Außenkontur des Faseroptikbands, des Stapels aus Faseroptikbändern bzw. der Zusammensetzung aus Bändern und der elektrisch leitfähigen Schicht (12) kleiner ist als der Durchmesser des mindestens einen Lichtwellenleiters (11).

12. Optische Baugruppe nach einem der Ansprüche 1 bis 6, wobei der mindestens eine Lichtwellenleiter (11) Aramidgarne (141) des mindestens einen Festigkeitsteils (14, 15, 16) kontaktiert, das zwischen dem mindestens einen Lichtwellenleiter (11) und der elektrisch leitfähigen Schicht (12) angeordnet ist, ein Metallband (121) um den mindestens einen Lichtwellenleiter (11) gedreht ist und das Aramidgarn (141) kontaktiert, eine Vielzahl von Metalldrähten (122) das Metallband (121) umgibt, wobei die Drähte (122b) jeweils in Kontakt mit einem ersten (122a) und einem zweiten (122c) benachbarten der Vielzahl von Metalldrähten (122) sind, und darüber hinaus in Kontakt mit dem Metallband (121) sind, eine Polymerhülle (13) die Vielzahl von Metalldrähten (122) umgibt, wobei die Hülle (13) in Kontakt mit jedem der Vielzahl von Metalldrähten (122) ist, wobei der Außendurchmesser (D5) der Hülle (13) 1,1 mm oder weniger, vorzugsweise 0,95 mm oder weniger beträgt.

13. Verwendung einer optischen Baugruppe nach einem der Ansprüche 1 bis 12 in einem elektronischen System, wobei das System eine optoelektronische Schaltung (61, 62) umfasst, das ein Stromversorgungsteil (612, 622) und ein Lichtsignalverarbeitungsteil (611, 621) umfasst, das die elektrisch leitfähige Schicht (632) an das Stromversorgungsteil (612, 622) der optoelektronischen Schaltung anschließt, um der optoelektronischen Schaltung (61, 62) elektrischen Strom zuzuführen und den mindestens einen Lichtwellenleiter (631) an das Lichtsignalverarbeitungsteil (611, 621) der optoelektronischen Schaltung anzuschließen, um der optoelektronischen Schaltung ein Lichtsignal zuzuführen.

14. Optisches Kabel mit einer ersten und zweiten optischen Baugruppe (10a, 10b) nach einem der Ansprüche 1 bis 13, darüber hinaus eine Ummantelung (50) aufweisend, die die erste und zweite optische Baugruppe (10a, 10b) umgibt.

## Revendications

1. Ensemble optique, comprenant :
au moins un guide d'ondes optique (11) ayant un diamètre (D2) ;
une couche électriquement conductrice (12) entourant l'au moins un guide d'ondes optique (11), sachant que la couche électriquement conductrice (12) comprend une bande électriquement conductrice (121) qui est filée hélicoïdalement autour de l'au moins un guide d'ondes optique (11) et sachant qu'un intervalle est établi entre des côtés latéraux adjacents de la bande électriquement conductrice ;
au moins un élément de renfort (14, 15, 16) disposé entre l'au moins un guide d'ondes optique (11) et la couche électriquement conductrice (12), l'au moins un élément de renfort (14, 15, 16) comprenant un filé (141) ; et
une enveloppe (13) entourant la couche électriquement conductrice (12),
sachant qu'une distance (D1, D3) quelconque entre la couche électriquement conductrice (12) et l'au moins un guide d'ondes optique (11) est inférieure au diamètre (D2) de l'au moins un guide d'ondes optique (11).

2. L'ensemble optique de la revendication 1, sachant que l'au moins un élément de renfort (14, 15, 16) comprend une mèche (14) composée d'un élément choisi parmi du filé d'aramide (141), du filé de verre, et du filé de carbone, la mèche (14) étant en contact avec l'au moins un guide d'ondes optique (11) et la couche électriquement conductrice (12).

3. L'ensemble optique de la revendication 1 ou 2, sachant que la couche électriquement conductrice (12) est formée à partir d'au moins un élément choisi parmi un matériau métallique, un métal et un matériau polymère électriquement conducteur, et l'enveloppe (13) est formée à partir d'un matériau polymère électriquement isolant.

4. L'ensemble optique de l'une quelconque des revendications 1 à 3, sachant que la couche électriquement conductrice (12) comprend une multitude de fils (122) entourant l'au moins un guide d'ondes optique (11).

5. L'ensemble optique de la revendication 4, sachant que les fils (122) sont toronnés le long de l'extension longitudinale de l'ensemble optique (10) ou sont filés autour de l'au moins un guide d'ondes optique (11) ou forment un maillage qui entoure l'au moins un guide d'ondes optique (11).

6. L'ensemble optique de l'une quelconque des revendications 1 à 5, sachant que la bande conductrice (121) forme une hélice autour de l'au moins un élément de renfort (14) et l'au moins un guide d'ondes optique (11).

7. L'ensemble optique de l'une quelconque des revendications 1 à 6, sachant que le guide d'ondes optique (11) est disposé dans une région de section transversale centrale de l'ensemble optique (10) et est un élément choisi parmi une fibre optique comprenant du verre de quartz et un guide d'ondes optique composé d'un matériau polymère, la couche électriquement conductrice (12) est composée d'au moins un élément choisi parmi une multitude de fils de cuivre (122) et une bande de cuivre (121) filée autour de l'au moins une fibre optique.

8. L'ensemble optique de l'une quelconque des revendications 1 à 7, sachant que la couche électriquement conductrice (12) a une forme circulaire entourant un espace, sachant qu'une distance (D1, D3) entre l'au moins un guide d'ondes optique (11) et la couche électriquement conductrice (12) est comprise entre 20 µm et 200 µm, de préférence entre 50 µm et 150 µm, et est de façon la plus préférentielle d'environ 50 µm, pour loger une multitude de mèches de filé d'élément de renfort entre l'au moins une fibre optique et la couche électriquement conductrice (12).

9. L'ensemble optique de l'une quelconque des revendications 1 à 8, comprenant en outre une autre couche électriquement conductrice (17) entourant l'enveloppe (13) et une autre enveloppe (18) entourant l'autre couche électriquement conductrice (17).

10. L'ensemble optique de la revendication 9, sachant que la couche électriquement conductrice (12) et l'autre couche électriquement conductrice (17) ont chacune une capacité de transport de courant, les capacités de transport de courant de la couche électriquement conductrice (12) et de l'autre couche électriquement conductrice (17) étant approximativement égales.

11. L'ensemble optique de l'une quelconque des revendications 1 à 10, sachant que l'au moins un guide d'ondes optique (11) est une partie d'un ruban de fibre optique ou un empilement de rubans de fibre optique ou une composition de fibres bourrées ensemble dans une relation sensiblement fixe disposés dans la région de section transversale centrale de l'ensemble optique (10), sachant qu'une distance (D1) quelconque entre une partie locale la plus étendue d'un contour extérieur du ruban de fibre optique, de l'empilement de rubans de fibre optique et de la composition de fibres, respectivement, et la couche électriquement conductrice (12) est inférieure au diamètre de l'au moins un guide d'ondes optique (11).

12. L'ensemble optique des revendications 1 à 6, sachant que l'au moins un guide d'ondes optique (11) est en contact avec des filés d'aramide (141) de l'au moins un élément de renfort (14, 15, 16) disposés entre l'au moins un guide d'ondes optique (11) et la couche électriquement conductrice (12), une bande métallique (121) est filée autour de l'au moins un guide d'ondes optique (11) et est en contact avec le filé d'aramide (141), une multitude de fils métalliques (122) entoure la bande métallique (121), chacun des fils (122b) étant en contact avec un premier (122a) et un deuxième (122c) fil adjacent parmi la multitude de fils métalliques (122) et étant en outre en contact avec la bande métallique (121), une enveloppe polymère (13) entoure la multitude de fils métalliques (122), l'enveloppe (13) étant en contact avec chacun de la multitude de fils métalliques (122), le diamètre extérieur (D5) de l'enveloppe (13) est de 1,1 mm ou moins, de préférence de 0,95 mm ou moins.

13. Utilisation d'un ensemble optique de l'une quelconque des revendications 1 à 12 dans un système électronique, le système comprenant un circuit opto-électronique (61, 62) qui comprend une partie d'alimentation en puissance (612, 622) et une partie de traitement de signal optique (611, 621), connectant la couche électriquement conductrice (632) à la partie d'alimentation en puissance (612, 622) du circuit opto-électronique pour fournir de la puissance électrique au circuit opto-électronique (61, 62) et connectant l'au moins un guide d'ondes optique (631) à la partie de traitement de signal optique (611, 621) du circuit opto-électronique pour fournir un signal optique au circuit opto-électronique.

14. Câble optique comprenant un premier et un deuxième ensemble optique (10a, 10b) de l'une quelconque des revendications 1 à 13, comprenant en outre une gaine (50) entourant le premier et le deuxième ensemble optique (10a, 10b).
